# EUROPEAN PATENT APPLICATION

(11) **EP 3 686 020 A1**
(43) Date of publication of application: **29.07.2020**
(21) Application number: 20152646.4
(22) Date of filing: 20.01.2020
(51) Int. Cl.: B41J 3/36, B41J 3/407, B41J 3/44, H04N 1/00, H04N 1/32, B41J 3/46, H04N 1/107, H04N 1/23

(54) **HANDHELD PRINTER NOTIFYING OPERATING STATE STATUS TO REMOTE TERMINAL AND RESTRICTING EXECUTION OF THE PRINT PROCESS ACCORDINGLY**

(30) Priority: 24.01.2019 JP 2019010591
(71) Applicant: Ricoh Company, Ltd., Tokyo 143-8555 (JP)
(72) Inventor: TANAKA, Hiroki, Tokyo, 143-8555 (JP); SHIKAMA, Takeshi, Tokyo, 143-8555 (JP); TAKEUCHI, Ryosuke, Tokyo, 143-8555 (JP)
(74) Representative: SSM Sandmair

(57) **Abstract**

A data processing apparatus (1) is configured to perform a specific processing operation in accordance with data transmitted from an external device (2). The data processing apparatus includes a data receiving unit (109), an operation receiving unit (104), a data processing unit (111, 107), a state determination unit (111, 1135), and a result output unit (109, 129, 1134, 111, 104). The data receiving unit (109) is configured to receive the data from the external device via a communication line. The operation receiving unit (104) is configured to receive an operation for instructing execution of the processing operation from the external device. The data processing unit (111, 107) is configured to execute data processing for executing the processing operation in accordance with the operation. The state determination unit (111, 1135) is configured to perform determination on whether a state of the data processing apparatus (1) is suitable for continuing the data processing. The result output unit (109, 129, 1134, 111, 104) is configured to output determination result information to the external device in accordance with the determination and the operation. The determination result information includes information on content of the determination.

## Description

### BACKGROUND

### Technical Field

Aspects of the present disclosure relate to a data processing apparatus, a data processing method, and a carrier medium.

### Related Art

In recent years, an image forming apparatus used for outputting digitized information has become an indispensable device. With the miniaturization and portability of devices (image data output devices) such as computers that output image data using this image forming apparatus, there has been increasing the demand for miniaturization and portability of the image forming apparatuses. Then, small-size image forming apparatuses without a sheet conveyance mechanism are being put to practical use. Note that a small and portable image forming apparatus is also called a handheld mobile printer, and a user manually scans an image forming target when executing image forming processing based on image data transmitted from an image information output device.

A printer is known as a type of data processing apparatus that executes a specific processing operation according to an operation instruction from a user. As a technique that can meet the above-described demand, for example, there has been disclosed a technique in which a driver executes a preparation instruction to a printer and, in response to the execution of preparation processing, causes an external device to execute print data generation processing and print instruction processing to the printer (see JP-2017-182523-A).

According to the technique disclosed in JP-2017-182523-A, an unnecessary processing operation (image forming operation) can be stopped by an operation on the printer side.

A data processing apparatus such as a handheld printer receives data used for execution of a specific processing operation (image forming operation) from the outside, and a user starts a processing operation and performs scanning for image formation. Therefore, in order to execute a specific processing operation and obtain a normal result, the influence of the operation by the user is large.

More specifically, when a start trigger for a processing operation is issued by a user operation even during reception of data from an external device or in a state unsuitable for the processing operation, the corresponding processing operation is started in the data processing apparatus such as a handheld printer. In such a case, there is no assurance for the handheld printer to perform the behavior expected by the user and it is difficult to obtain a result as intended by the user.

If the processing operation cannot be normally continued when the start trigger is issued by the user operation, the behavior of the handheld printer may be different from what the user expects and the user may perform the operation of issuing the start trigger again. In such a case, for example, the operation of the handheld printer is stopped and the behavior unintended by the user is repeated, and it is difficult to obtain a result as intended by the user.

In addition, if the user continues to scan without realizing that the state of the handheld printer has changed to a state unsuitable for continuing the processing operation during normal operation, the image forming operation causes a result unintended by the user

As described above, in a conventional data processing apparatus, there has been a disadvantage in which an apparatus that starts and continues a specific processing operation with a user operation is difficult to obtain a processing result intended by a user unless the relationship between the user operation and the state of the apparatus is controlled.

### SUMMARY

An object of the present disclosure is to provide a data processing apparatus that restricts execution of a processing operation when there is a possibility that a behavior unintended by a user may occur, and obtains a processing result as intended by the user.

In an aspect of the present disclosure, there is provided a data processing apparatus configured to perform a specific processing operation in accordance with data transmitted from an external device. The data processing apparatus includes a data receiving unit (109), an operation receiving unit (104), a data processing unit (111, 107), a state determination unit (111, 1135), and a result output unit (109, 129, 1134, 111, 104). The data receiving unit (109) is configured to receive the data from the external device via a communication line. The operation receiving unit (104) is configured to receive an operation for instructing execution of the processing operation from the external device. The data processing unit (111, 107) is configured to execute data processing for executing the processing operation in accordance with the operation. The state determination unit (111, 1135) is configured to perform determination on whether a state of the data processing apparatus (1) is suitable for continuing the data processing. The result output unit (109, 129, 1134, 111, 104) is configured to output determination result information to the external device in accordance with the determination and the operation. The determination result information includes information on content of the determination.

In another aspect of the present disclosure, there is provided a data processing method for executing a specific processing operation in accordance with data transmitted from an external device. The method includes: receiving the data from the external device via a communication line; receiving an operation for instructing execution of the processing operation from outside; executing data processing for executing the processing operation in accordance with the operation; performing determination on whether a state of an apparatus to execute the processing operation is suitable for continuing the data processing; and outputting determination result information to the external device in accordance with the determination and the operation. The determination result information includes information on content of the determination.

In still another aspect of the present disclosure, there is provided a carrier medium carrying computer readable code for controlling a computer to carry out the data processing method.

According to the present disclosure, when there is a possibility that a behavior unintended by the user may occur, the execution of the processing operation can be restricted and a processing result as intended by the user can be obtained.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIG. 1 is a schematic view illustrating a state of image formation performed using a handheld printer according to an embodiment of the present disclosure;
FIG. 2 is a block diagram of a hardware configuration of the handheld printer according to an embodiment of the present disclosure;
FIG. 3 is a functional block diagram of a configuration of a control unit according to an embodiment of the present disclosure;
FIG. 4 is a functional block diagram of an internal configuration of a determination processing unit according to an embodiment of the present disclosure;
FIG. 5 is a block diagram of a hardware configuration of an image data transmitting terminal according to an embodiment of the present disclosure;
FIG. 6 is a functional block diagram of an internal configuration of a controller of the image data transmitting terminal according to an embodiment of the present disclosure;
FIG. 7 is a state transition diagram illustrating an example of state transition of the handheld printer according to an embodiment of the present disclosure;
FIG. 8 is a sequence diagram of an operation procedure from activation of the handheld printer to completion of image formation according to an embodiment of the present disclosure;
FIG. 9 is a flowchart illustrating a flow of an initialization process of the handheld printer according to an embodiment of the present disclosure;
FIG. 10 is a flowchart illustrating a flow of a state acquisition process of the image data transmitting terminal according to an embodiment of the present disclosure;
FIG. 11 is a diagram illustrating an example of a screen display of a terminal connected to the handheld printer;
FIG. 12 is a diagram illustrating another example of the screen display of the terminal connected to the handheld printer;
FIG. 13 is a flowchart illustrating a flow of an operation start determination process of the handheld printer according to an embodiment of the present disclosure;
FIG. 14 is a flowchart illustrating a flow of a print execution process of the handheld printer according to an embodiment of the present disclosure; and
FIG. 15 is a flowchart illustrating a flow of a printing state determination process of the handheld printer according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

### Overview of Data Processing Apparatus

Hereinafter, a data processing apparatus according to an embodiment of the present disclosure is described with reference to the drawings. The data processing apparatus according to an embodiment of the present disclosure receives data input from an external device and a user operation to execute a specific processing operation. For example, when the data input from the external device matches the content of the user operation, a normal processing operation can be performed. When the data processing apparatus determines that the data input from the external device does not matches the content of the user operation and normal processing operation cannot be continued, the data processing apparatus restricts the execution of the processing operation.

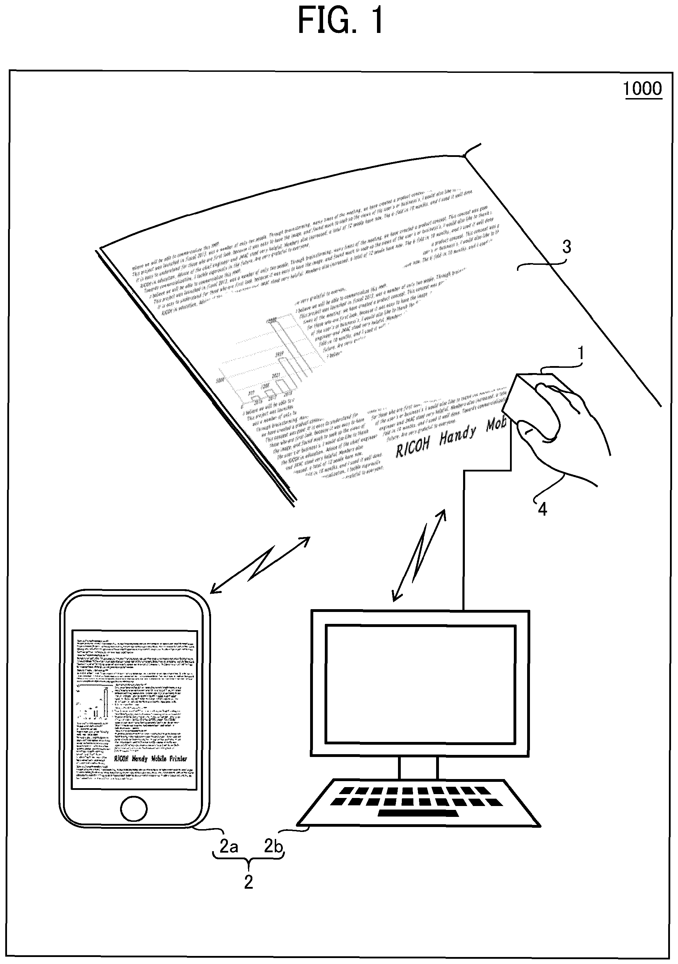

Hereinafter, a handheld printer 1 illustrated in FIG. 1 is exemplified as the data processing apparatus according to an embodiment of the present disclosure. The handheld printer 1 is a portable image forming apparatus, and a start operation for executing an image forming process is performed by an operation of a user 4, and a scan necessary for an image forming operation is performed by an operation of the user 4.

FIG. 1 is a schematic view of an overall image of an image forming system 1000 that includes a handheld printer 1 and an image data transmission device 2 as an information output device according to an embodiment of the present disclosure, in other words, a state in which an image forming process (image forming operation) is performed using the handheld printer 1. The handheld printer 1 performs the image forming process, which is an example of a specific processing operation, according to image data received from the image data transmission device 2 that is an external device, according to an embodiment of the present disclosure, corresponding to a sender of data used for the specific processing operation.

The image data transmission device 2 includes a wireless terminal 2a such as a smartphone connected via a wireless connection interface (hereinafter, referred to as "I / F"), a wired connection I / F, a wireless connection I / F, and a wired terminal 2b such as a personal computer (PC) connected via the foregoing devices. Hereinafter, in the present specification, when a description is given based on the information output device that does not limit the format of the communication I / F, the "image data transmission device 2" is simply referred to.

As illustrated in FIG. 1, when the handheld printer 1 receives image data from the image data transmission device 2 and performs an image forming operation on a recording medium 3, the user 4 manually scan the recording medium 3 with the handheld printer 1. The handheld printer 1 discharges droplets containing a colorant such as ink to the recording medium 3 according to its own position. As a result, the image formation output based on the image data received from the image data transmission device 2 using the handheld printer 1 is executed.

In the present embodiment, the recording medium 3 is a member having a flat portion such as a notebook or a copy sheet as illustrated in FIG. 1. For example, the recording medium 3 is a standard size paper. Note that the material and shape of a member applicable as the recording medium 3 are not particularly limited as long as the member can be manually scanned by the handheld printer 1. Therefore, the recording medium 3 may be any medium that can detect the position of the handheld printer 1 that moves with manual scanning, and may be a medium that includes a curved surface.

The handheld printer 1 receives image data from an external device in order to perform an image forming operation that is a type of a specific processing operation. An operation start trigger for starting the image forming operation is operated by the user 4, and the user 4 also performs an operation for continuing the image forming operation. Therefore, if no measures are taken, the reception of image data would be completed and the user 4 would execute the operation start trigger to start the image forming operation before the handheld printer 1 reaches a state in which the processing operation can be normally performed. In such a case, the operation unintended by the user 4 would be performed.

There are various operations that the user does not intend. For example, even if the user 4 executes the operation start trigger in response to the completion of the reception of the image data from the image data transmission device 2, the handheld printer 1 cannot perform an image forming operation if the handheld printer 1 is executing the initialization process. In such a case, the user 4 can recognize that the handheld printer 1 has been stopped and the operation start trigger has not been correctly recognized, so that the user 4 can input the operation start trigger again. In such a case, the input of the operation start trigger to the operating handheld printer 1 causes the handheld printer 1 to stop the processing being executed. As described above, if the operation start trigger is recognized when the user 4 cannot normally start the processing operation, the behavior of the handheld printer 1 differs from the assumed behavior and the user 4 cannot operate as intended.

Further, if the user 4 lifts the handheld printer 1 from the recording medium 3 during the scanning for executing the image forming operation, a normal image forming operation cannot be performed. If the handheld printer 1 continues the processing relating to the image forming operation, the processing result not intended by the user 4 would be caused.

The handheld printer 1 according to the present embodiment is capable of coping with the above-described circumstances. When starting a processing operation or continuing the processing operation, the handheld printer 1 restricts a specific processing operation based on the operation of the user 4 according to the state of the handheld printer 1, to prevent unintended operation of the user 4.

### Hardware Configuration of Handheld Printer 1

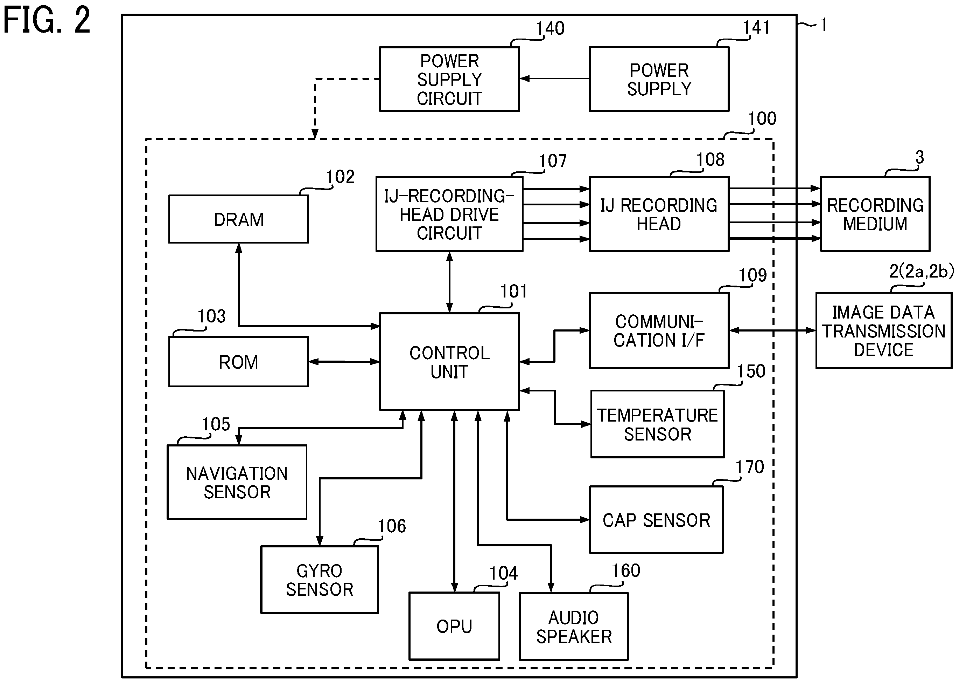

Next, a hardware configuration of the handheld printer 1 is described with reference to FIG. 2. As illustrated in FIG. 2, the handheld printer 1 includes hardware similar to hardware of a general computer, and includes a control unit 101, a power supply circuit 140, a power supply 141, a dynamic random access memory (DRAM) 102, a read only memory (ROM) 103, and an operation panel unit (OPU) 104, a navigation sensor 105, a gyro sensor 106, an inkjet (IJ) recording head drive circuit 107, an IJ recording head 108, a communication interface (I / F) 109, a temperature sensor 150, an audio speaker 160, and a cap sensor 170.

The control unit 101 controls the operation of the entire handheld printer 1. The functional configuration of the control unit 101 is described later. The control unit 101 is electrically connected to the DRAM 102, the ROM 103, the OPU 104, the navigation sensor 105, the gyro sensor 106, the IJ-recording-head drive circuit 107, the communication I / F 109, the temperature sensor 150, the audio speaker 160, and the cap sensor 170.

As the power supply 141 can be used, for example, a dry battery, a rechargeable battery, a solar battery, or a fuel battery. The power supply circuit 140 is connected to each device surrounded by a broken line 100 in FIG. 2 by an electric wire, and distributes the power supplied by the power supply 141 to each device of the handheld printer 1.

The power supply circuit 140 raises or lowers the voltage of the power supply 141 to a voltage suitable for each device when distributing power to each device of the handheld printer 1. When a rechargeable-and-dischargeable battery is used as the power supply 141, the power supply 141 has a function of charging the battery. For example, the power supply circuit 140 detects connection of a commercial power supply to the handheld printer 1 and connects the power supply 141 to a circuit for charging the power supply 141.

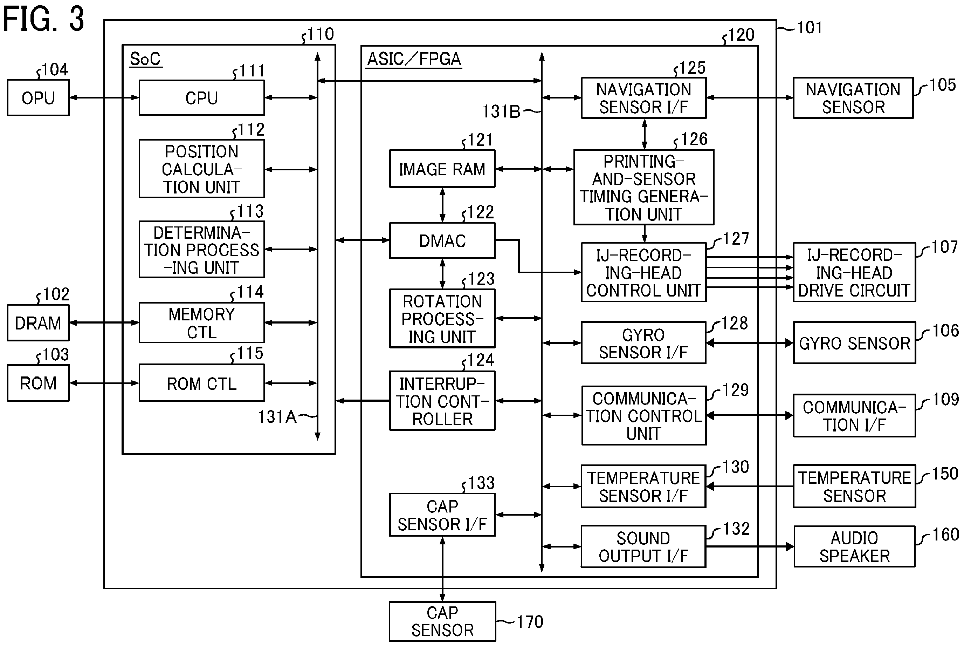

The DRAM 102 is a volatile storage medium to store image data received from the image data transmission device 2 via the communication I / F 109 or record firmware expanded from the ROM 103. The DRAM 102 is used as a work memory when the central processing unit (CPU) 111 (see FIG. 3) of the control unit 101 executes the firmware.

The ROM 103 is a non-volatile storage medium to store various programs such as firmware for performing hardware control of the handheld printer 1 executed by the control unit 101. The ROM 103 also stores, for example, drive waveform data for causing the IJ recording head 108 to perform an discharge operation and initial setting data of the handheld printer 1.

The OPU 104 is an operation display unit that serves as an operation unit to receive an operation from the user 4 and a display unit to display the state of the handheld printer 1, and includes an light emitting diode (LED), a switch (for example, an LED switch and a power switch), and the like. As the OPU 104 may be used, for example, a display mechanism, such as a liquid crystal panel or a touch panel display, or a sound generation mechanism that generates sound. The control unit 101 recognizes the operation of the user 4 on the OPU 104 as an "operation start trigger" for instructing the handheld printer 1 to start executing an image forming operation (specific processing operation) or an "operation end trigger" for instructing the end of the image forming operation. The OPU 104 constitutes at least part of an operation receiving unit.

The navigation sensor 105 is a sensor to detect and output a moving amount, a rotation amount, an acceleration, and the like of the position of the handheld printer 1 or the IJ recording head 108 for each sampling cycle. As a configuration of the navigation sensor 105, for example, an optical distance measuring sensor is used that includes a combination of a light source, such as a LED or a laser, and an image pickup device to pick up an image on the recording medium 3. Note that an acceleration sensor may be used as the configuration of the navigation sensor 105.

The optical distance measuring sensor constituting the navigation sensor 105 detects edges, which are change points of color or brightness, on the surface of the recording medium 3 in accordance with the scanning of the handheld printer 1 by the operation of the user 4 on the recording medium 3. A detection signal of the edge with the navigation sensor 105 is input to the control unit 101. The control unit 101 calculates the moving amount of the handheld printer 1 based on the distance between the edges.

The gyro sensor 106 can detect angular velocities with the movement of the handheld printer 1 and integrates the detected angular velocities to detect a rotation angle θ. The posture (inclination) of the handheld printer 1 can be determined based on the detection results of the gyro sensor 106. Such a configuration can determine that the handheld printer 1 is in a state of hindering normal image formation, such as a state in which the handheld printer 1 floats from the recording medium 3 during scanning of an image formation output or a state in which the discharge direction of droplets from the IJ recording head 108 is inclined relative to the recording medium 3. Further, when the navigation sensor 105 includes an acceleration sensor, the orientation and inclination of the body of the handheld printer 1 can be more accurately detected by combining the detection result of the navigation sensor 105 with the detection result of the gyro sensor 106. The navigation sensor 105 and the gyro sensor 106 function as a moving amount detector.

The IJ-recording-head drive circuit 107 generates a drive voltage for driving the IJ recording head 108 based on the drive waveform data output from the control unit 101. The IJ-recording-head drive circuit 107 generates a drive voltage according to the size of ink droplets discharged from the IJ recording head 108.

The IJ recording head 108 is a droplet discharge device to discharge ink (droplets) and corresponds to an external output unit to execute an external output based on a result of data processing. In the present embodiment, a configuration capable of discharging four color inks of cyan (C), magenta (M), yellow (Y), and black (K) is exemplified. In some embodiments, a configuration of discharging a single color ink or a configuration of discharging five or more colors of ink may be used. The IJ recording head 108 discharges ink toward the recording medium 3 by the drive voltage output from the IJ-recording-head drive circuit 107. An image is formed on the recording medium 3 by the discharged ink.

As a driving method of the IJ recording head 108 can be used, for example, a piezo method using a piezoelectric element such as a piezo element or a thermal method using bubbles generated by heating ink to discharge ink.

In the present embodiment, it is assumed that various information used for determining the moving direction and the moving amount of the handheld printer 1 with the navigation sensor 105 are stored in a storage medium, such as the ROM 103, in advance. Here, the "various information" refers to, for example, the distance from the navigation sensor 105 to an end of the IJ recording head 108 and the distance between a nozzle arranged at a position closest to an end of the IJ recording head 108 and the end of the IJ recording head 108. Various information further includes a distance between nozzles arranged in the IJ recording head 108 and the like.

The communication I / F 109 establishes a connection for performing data communication with an external device through communication conforming to various wireless communication standards, for example, a wireless local area network (LAN) or near field communication (NFC), or wired communication such as a wired LAN or universal serial bus (USB). Via the communication I / F, the handheld printer 1 communicates with external devices, such as the image data transmission device 2 and other information processing devices. Note that the communication I / F 109 has a configuration capable of simultaneously establishing a plurality of connections and can simultaneously establish a data communication enabled state with a plurality of external devices.

Therefore, the communication I / F 109 constitutes a data receiving unit including a wired communication device and a wireless communication device. The communication I / F 109 also constitutes a result output unit to output determination result information including a determination result of the state of the handheld printer 1 to the connected image data transmission device 2.

### Internal Function Block of Control Unit 101

Next, an internal configuration of the control unit 101 according to the present embodiment is described with reference to FIG. 3. FIG. 3 is a functional block diagram of a configuration of the control unit 101 according to the present embodiment. The control unit 101 according to the present embodiment includes a system on chip (SoC) 110 and an application specific integrated circuit (ASIC) / field programmable gate array (FPGA) 120. Communication between the SoC 110 and the ASIC / FPGA 120 is performed via buses 131A and 131B.

Note that the ASIC / FPGA 120 may be designed using any of an ASIC implementation technology and an FPGA implementation technology. The ASIC / FPGA 120 may be configured to use a implementation technology other than the ASIC and the FPGA. The SoC 110 and the ASIC / FPGA 120 may be mounted on one chip or substrate instead of separate chips, or on three or more chips or substrates.

The SoC 110 includes a CPU 111, a position calculation unit 112, a determination processing unit 113, a memory controller (CTL) 114, and a ROM CTL 115 connected via a bus 131A. The SoC 110 may be configured to include functions other than the above-described functions.

The ASIC / FPGA 120 includes an image RAM 121, a direct memory access controller (DMAC) 122, a rotation processing unit 123, an interruption controller 124, a navigation sensor I / F 125, a printing-and-sensor timing generation unit 126, a IJ-recording-head control unit 127, a gyro sensor I / F 128, a communication control unit 129, a temperature sensor I / F 130, a sound output I / F 132, and a cap sensor I / F 133 that are connected via a bus 131B. The ASIC / FPGA 120 may be configured to include functions other than the above-described functions.

The CPU 111 executes, for example, firmware developed from the ROM 103 to the DRAM 102 to control the operations of the position calculation unit 112, the determination processing unit 113, the memory CTL 114, and the ROM CTL 115 in the SoC 110.

The CPU 111 further controls the operations of the image RAM 121, the DMAC 122, the rotation processing unit 123, the interruption controller 124, the navigation sensor I / F 125, the printing-and-sensor timing generation unit 126, the IJ-recording-head control unit 127, the gyro sensor I / F 128, the communication control unit 129, the temperature sensor I / F 130, the sound output I / F 132, and the cap sensor I / F 133 that are included in the AISC / FPGA 120. The CPU 111 controls the above-described components to achieve the functions of the components constituting the handheld printer 1.

The position calculation unit 112 calculates the position of the handheld printer 1 based on the amount of movement of the handheld printer 1 input from the navigation sensor 105 and the gyro sensor 106 at each sampling cycle. The position of the handheld printer 1 is strictly the position of a nozzle of the IJ recording head 108. However, if the position at which the navigation sensor 105 exists is known, the position of the nozzle can be calculated.

The position calculation unit 112 calculates the position of the navigation sensor 105 based on a predetermined origin, for example, the initial position of the handheld printer 1 at the start of an image formation output. The position calculation unit 112 estimates the moving speed and the moving direction of the handheld printer 1 in the next sampling cycle based on the difference between the past calculation result of the position of the navigation sensor 105 and the newest calculation result of the position of the navigation sensor 105.

The position calculation unit 112 may be configured to predict the position of the navigation sensor 105 in the next sampling cycle based on the estimation result of the moving speed and the moving direction of the handheld printer 1.

The determination processing unit 113 determines whether the handheld printer 1 is scanning an image area 300 based on the calculation result of the position of the handheld printer 1 by the position calculation unit 112 and image area information received from the image data transmission device 2. The determination processing unit 113 receives a connection status of the image data transmission device 2 in the communication I / F 109 from the communication control unit 129 and determines the status (wireless communication or wireless communication) of the external device connected to the handheld printer 1. The determination processing unit 113 constitutes a connection determination unit.

As described above, the position of the handheld printer 1 is strictly the position of a nozzle of the IJ recording head 108. However, if the position at which the navigation sensor 105 exists is known, the position of the nozzle can be calculated. Therefore, the determination processing unit 113 may be configured to calculate the positions of nozzles arranged on the IJ recording head 108 from the calculation result of the position of the handheld printer 1 and determines whether the positions of nozzles are in positions at which the image area 300 can be scanned.

The "image area information" is information defined based on image data selected by the user 4 as an object of image formation output by the handheld printer 1. The image area information is also information indicating an area on the recording medium 3 in which the image data selected as the object of image formation output is formed.

The memory CTL 114 is an I / F with the DRAM 102 and requests data from the DRAM 102. The memory CTL 114 transfers firmware acquired from the DRAM 102 to the CPU 111 and transfers image data obtained from the DRAM 102 to the ASIC / FPGA 120.

The ROM CTL 115 is an I / F with the ROM 103 and requests data from the ROM 103. The ROM CTL 115 transfers the data acquired from the ROM 103 to the CPU 111 or the ASIC / FPGA 120.

The image RAM 121 temporarily stores the image data acquired by the DMAC 122. That is, image data is buffered in the image RAM 121, and a peripheral image corresponding to the position of the handheld printer 1 is read from the image data buffered in the image RAM 121.

The rotation processing unit 123 performs rotation processing on the image data acquired by the DMAC 122 according to the IJ recording head 108 and the positions of nozzles in the IJ recording head 108. The DMAC 122 outputs the image data having been subjected to the rotation processing to the IJ-recording-head control unit 127.

The rotation processing unit 123 acquires, for example, the rotation angle θ calculated by the position calculation unit 112 when the position calculation unit 112 calculates the position of the handheld printer 1, and performs rotation processing on the peripheral image using the rotation angle θ. Note that the rotation angle θ used here is an angle at which, when staring an image formation output, the handheld printer 1 is inclined on the plane of the recording medium 3 with respect to the posture in which the handheld printer 1 performs the normal image formation on the recording medium 3.

The interruption controller 124 detects that the navigation sensor I / F 125 has completed communication with the navigation sensor 105 and that the gyro sensor I / F 128 has completed communication with the gyro sensor 106. The interruption controller 124 outputs an interruption signal for notifying the SoC 110 of the completion of the communication. The CPU 111 acquires the moving amount of the navigation sensor 105 stored in an internal register of the navigation sensor I / F 125 based on the interruption signal. The interruption controller 124 also has a function of notifying a status such as an error.

The printing-and-sensor timing generation unit 126 notifies the navigation sensor I / F 125 of the timing at which the detection signal of the navigation sensor 105 is read, and also notifies the IJ-recording-head control unit 127 of the drive timing. When it is determined that the nozzle position has reached a target discharge position at which ink should be discharged, the IJ-recording-head control unit 127 discharges ink to the recording medium 3.

The communication control unit 129 detects that the wireless terminal 2a or the wired terminal 2b is connected to the communication I / F 109, and notifies the determination processing unit 113 of the connection state. The communication control unit 129 controls communication with the wireless terminal 2a or the wired terminal 2b connected to the communication I / F 109. Thus, the communication control unit 129 constitutes a result output unit to output determination result information, which is described in detail later, including a result of the determination to the image data transmission device 2.

The temperature sensor I / F 130 notifies the CPU 111 of a measurement result from temperature sensor 150 that measures the internal environmental temperature of the handheld printer 1.

The sound output I / F 132 drives the audio speaker 160 based on the notification information notified from the CPU 111 to output a predetermined sound.

The cap sensor I / F 133 notifies the CPU 111 of a detection result of the cap sensor 170 that detects a cap attached to prevent drying of the IJ recording head 108. The cap is for protecting ink discharge ports (nozzles) of the IJ recording head 108 when the handheld printer 1 is not used.

### Functional Configuration of Determination Processing Unit 113

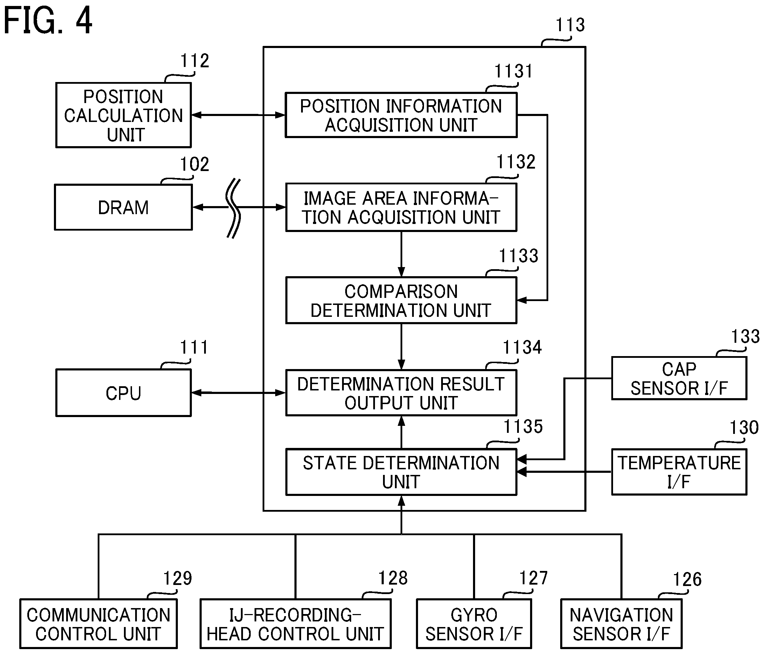

Next, a detailed configuration of the determination processing unit 113 according to the present embodiment is described with reference to FIG. 4. FIG. 4 is a functional block diagram of an internal configuration of the determination processing unit 113. The determination processing unit 113 includes a position information acquisition unit 1131, an image area information acquisition unit 1132, a comparison determination unit 1133, a determination result output unit 1134, and a state determination unit 1135.

The position information acquisition unit 1131 acquires information on the position of the handheld printer 1 calculated by the position calculation unit 112. Note that the position information acquisition unit 1131 may be configured to acquire information on the positions of the nozzles arranged on the IJ recording head 108.

The image area information acquisition unit 1132 acquires, from a storage medium such as the DRAM 102, image area information indicating an area on the recording medium 3 in which the image data selected by the user 4 as an object of image formation output of the handheld printer 1 is formed. The image area information is transmitted from the image data transmission device 2 to the handheld printer 1 and stored in a storage medium such as the DRAM 102.

The comparison determination unit 1133 determines whether the current scanning position of the handheld printer 1 is within the image area 300 based on the information on the position of the handheld printer 1 and the image area information acquired by the position information acquisition unit 1131.

The determination result output unit 1134 outputs, to the CPU 111, the determination result of the comparison determination unit 1133 regarding whether the current scanning position of the handheld printer 1 is within the image area 300. The determination result output unit 1134 outputs the determination result of the state determination unit 1135 regarding the connection state of the image data transmission device 2 to the CPU 111. The determination result output unit 1134 outputs the determination result of the state determination unit 1135 regarding the temperature measured by the temperature sensor 150 to the CPU 111. The determination result output unit 1134 outputs the determination result of the state determination unit 1135 based on the detection result of the cap sensor 170 to the CPU 111. The determination result output unit 1134 constitutes the result output unit.

The state determination unit 1135 determines the connection state of the image data transmission device 2 acquired by the communication control unit 129, and notifies the determination result to the determination result output unit 1134. The state determination unit 1135 outputs, to the determination result output unit 1134, determination result information including information indicating that the cap is attached to the IJ recording head 108, based on the detection result of the cap sensor 170 acquired via the cap sensor I / F 133. The state determination unit 1135 also notifies the determination result output unit 1134 of determination result information including information indicating the internal environmental temperature of the handheld printer 1, based on the measurement result of the temperature sensor 150 acquired via the temperature sensor I / F 130.

The CPU 111 notifies the user 4 of the current scanning position of the handheld printer 1 (out-of-image-area notification) based on the determination result regarding whether the current scanning position of the handheld printer 1 received from the determination result output unit 1134 is within the image area 300.

The CPU 111 determines the type of notification to the connected image data transmission device 2 based on the connection information in the handheld printer 1 received from the determination result output unit 1134, and transmits the determined connection state change notification to the communication control unit 129.

The CPU 111 causes an application developed in the DRAM 102 to generate notification information for the out-of-image-area notification and notification information based on the connection state and transmit the generated notification information to the image data transmission device 2. When receiving the notification information, the image data transmission device 2 performs the out-of-image-area notification through display of character information such as "out of the area in which an image is printed" or voice guidance.

When receiving the notification information, the image data transmission device 2 also displays character information, for example, "The device is being used by another device. Please wait until the use is over.", or voice guidance to notify the user 4 of a state in which the image data transmission is not permitted. Thus, the CPU 111 and the image data transmission device 2 cooperate to function as a determination result notification unit.

If the determination result information notified from the determination result output unit 1134 includes information indicating that the cap is attached, the CPU 111 notifies the IJ-recording-head control unit 127 of a control signal for stopping the operation of the IJ-recording-head control unit 127 (or disabling the input operation).

The CPU 111 executes an internal temperature correction based on the measurement temperature of the temperature sensor 150 in the determination result information notified from the determination result output unit 1134 and notifies the IJ-recording-head control unit 127 of the correction result. The control signal for stopping the operation is notified to the IJ-recording-head drive circuit 107 until the determination result information includes information indicating that the temperature of the IJ recording head 108 is in a state of "warm-up completion". Thus, the CPU 111 and the IJ-recording-head drive circuit 107 cooperate to constitute an operation restriction unit.

Note that the CPU 111 performs, for example, notification through control to blink the OPU 104 such as an LED switch or a power switch as the out-of-image-area notification, an offline notification, or an online notification to the user 4. In the case in which the OPU 104 includes a sound generation mechanism, the CPU 111 performs the out-of-image-area notification, the offline notification, or the online notification using a buzzer or voice guidance. Thus, the CPU 111 and the OPU 104 cooperate to constitute the result output unit.

The CPU 111 determines whether the state is suitable for continuing the image forming operation based on the determination result information generated by the state determination unit 1135, and restricts the operation of the handheld printer 1 based on the determination result. Thus, the CPU 111 constitutes the operation restriction unit, and the CPU 111 and the state determination unit 1135 cooperate to constitute a state determination unit. The CPU 111 and the IJ-recording-head drive circuit 107 cooperate to constitute a data processing unit.

### Hardware Configuration of Image Data Transmission Device 2

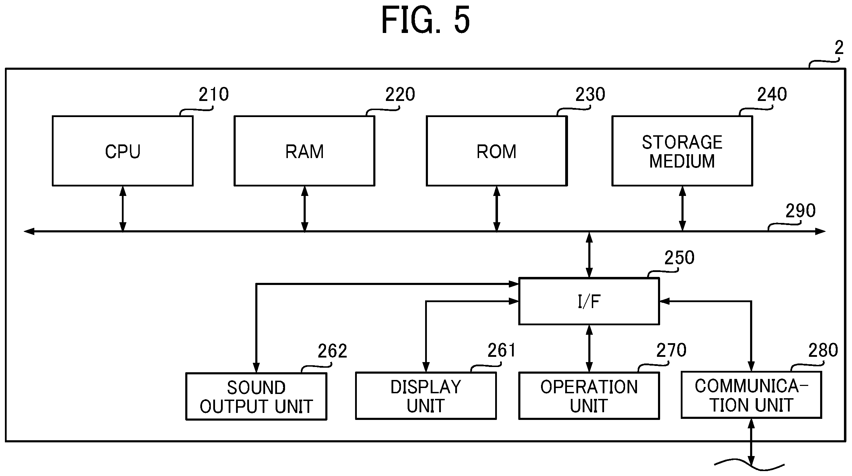

Next, a hardware configuration of the image data transmission device 2 is described. FIG. 5 depicts a hardware configuration of the image data transmission device 2. The image data transmission device 2 according to the present embodiment has the same configuration as an information processing apparatus such as a general PC. That is, the image data transmission device 2 according to the present embodiment is connected to a CPU 210, a RAM 220, a ROM 230, a storage medium 240 such as a hard disk drive (HDD), and an I / F 250 via a bus 290.

In addition to the above-described configuration, the image data transmission device 2 further includes a display unit 261 such as a liquid crystal display (LCD), an operation unit 270 such as a keyboard, and a communication unit 280 that are connected via the I / F 250. The communication unit 280 constitutes a communication I / F to communicate with the handheld printer 1 and other information processing terminals through a wired connection such as a LAN or a wireless connection such as an NFC or a wireless LAN. The communication unit 280 may include both a wireless connection and a wired connection. For example, the wireless terminal 2a illustrated in FIG. 1 may be provided with a wired connection I / F and the wired terminal 2b may be provided with a wireless connection I / F. A sound output unit 262 to output sound is also connected via the I / F 250.

The CPU 210 is an arithmetic unit and controls the operation of the entire image data transmission device 2. The RAM 220 is a volatile storage medium capable of reading and writing information at high speed and is used as a work area (working memory) when the CPU 210 processes information. The ROM 230 is a read-only nonvolatile storage medium and stores programs such as firmware.

The storage medium 240 is a nonvolatile storage medium, such as an HDD and a solid state drive (SSD), on which information can be read and written, and stores an operating system (OS), various control programs, application programs (hereinafter, applications), and the like. The I / F 250 connects the bus 290 to various hardware, such as the display unit 261, the operation unit 270, and the sound output unit 262, and a network and the like via the communication unit 280 to control such various hardware and the network.

The display unit 261 is a user I / F to allow the user 4 to check the state of the image data transmission device 2 received via the I / F 250. The operation unit 270 includes a keyboard or the like and is a user I / F for the user 4 to input information to the image data transmission device 2. Note that the display unit 261 and the operation unit 270 may be configured as a touch panel using a resistance film system, a surface acoustic wave system, a capacitance system, or the like as an operation principle system.

The sound output unit 262 notifies the user 4 of the state of the handheld printer 1 as a sound based on the determination result information notified from the handheld printer 1.

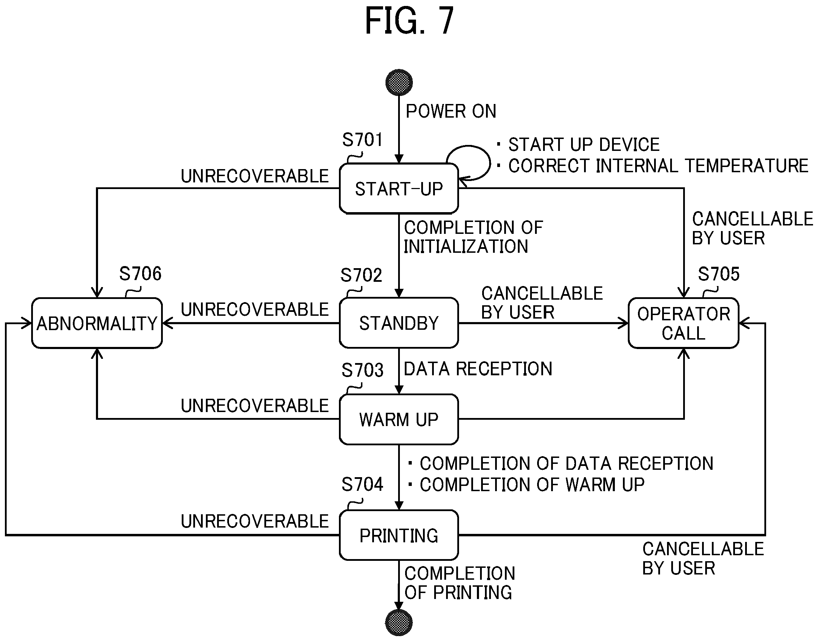

In such a hardware configuration, the internal functions of the controller 200 illustrated in FIG. 7 are configured by the CPU 210 performing operations according to programs stored in the ROM 230 or programs read from the storage medium 240 onto the RAM 220. A combination of the internal functions of the controller 200 and the hardware constitutes functional blocks for realizing the functions of the image data transmission device 2.

### Functional Blocks of Controller 200

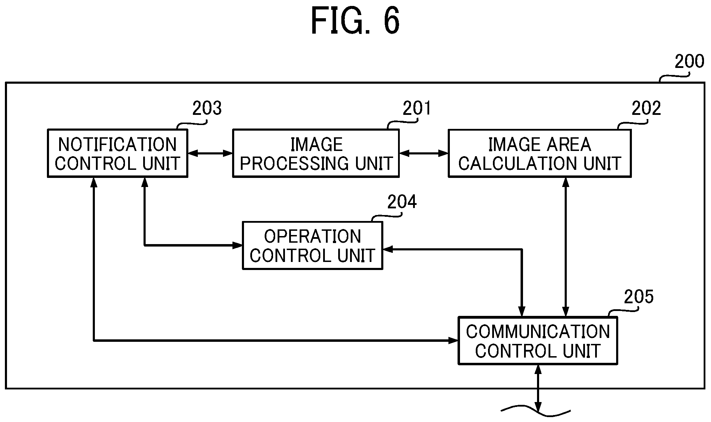

Next, the internal functions of the controller 200 of the image data transmission device 2 are described. FIG. 6 is a functional block diagram illustrating a configuration of internal functions of the controller 200 according to the present embodiment.

The controller 200 includes an image processing unit 201, an image area calculation unit 202, a notification control unit 203, an operation control unit 204, and a communication control unit 205. The image processing unit 201 performs processing of converting image data selected by the user 4 as an object of image formation output of the handheld printer 1 into a format that can be output by the handheld printer 1.

The image processing unit 201 applies a condition set by the user 4 on the image formation output, for example, a condition such as monochrome or color printing, enlargement or reduction, or the like to perform the processing of converting the image data into the format that can be output by the handheld printer 1.

The image area calculation unit 202 calculates an area in which the image data selected by the user 4 as an object of image formation output of the handheld printer 1 is formed, based on the image data processed by the image processing unit 201, to generate image area information. Note that a configuration may be employed in which the user 4 designates and determines the area in which image data is formed to generate the image area information.

The notification control unit 203 controls a screen displayed on the display unit 261. For example, when receiving the out-of-image-area notification information from the handheld printer 1, the notification control unit 203 causes the display unit 261 to display a screen based on the out-of-image-area notification information.

When receiving initialization completion notification from the handheld printer 1, the notification control unit 203 causes the display unit 261 to display a screen based on the initialization completion notification. In such a case, the notification control unit 203 may output a sound indicating the completion of the initialization of the handheld printer 1 via the sound output unit 262.

When receiving a notification of an abnormal state or an operator call state from the handheld printer 1, the notification control unit 203 causes the display unit 261 to display a screen for notifying the user 4 of the notification. In such a case, the notification control unit 203 may output a sound indicating the state of the handheld printer 1 via the sound output unit 262.

The operation control unit 204 generates control information based on the operation of the operation unit 270 by the user 4 and transmits the control information to each unit of the controller 200. The communication control unit 205 controls communication with the handheld printer 1 and controls transmission and reception of information with the handheld printer 1.

With the above-described configuration, the image forming system 1000 according to the present embodiment executes the image formation output on the recording medium 3 using the handheld printer 1 based on the image data received from the image data transmission device 2.

When an image formation output is performed using the handheld printer 1, the user 4 scans the recording medium 3 while holding the handheld printer 1. Accordingly, if the handheld printer 1 scans the inside of a virtually set image area on the recording medium 3, the image formation output is performed.

Note that, since a marker or the like indicating the image area 300 is not indicated on the recording medium 3, it is difficult for the user 4 to recognize that the position corresponds to the inside of the image area 300 while scanning the handheld printer 1. Therefore, the user 4 scans all over the recording medium 3 in order to print all the image as an object of image formation output.

The handheld printer 1 according to the present embodiment notifies he user 4 of the positional relationship with a current position of the handheld printer 1 and an image area 300, which is an area in which image data is formed on the recording medium 3, so that the user 4 can efficiently perform scanning in the image formation output. Such notification can reduce unnecessary scanning of the handheld printer 1 by the user 4 on the recording medium 3 can be reduced, thus allowing image formation output to be efficiently performed.

### State Transition of Handheld Printer 1

Next, with reference to FIG. 7, a description is given of possible states of the handheld printer 1 in execution of printing (image forming operation) as a specific processing operation. First, when the power is turned on, the state shifts to a "starting up" state (S701). In the "starting up" state (S701), the internal temperature of the IJ recording head 108 is corrected. In addition, during the "starting up" state (S701), an initialization process including processing of starting internal devices, starting sensor operations, and the like is executed in addition to the correction of the internal temperature.

When the initialization process ends, the state shifts to a "standby" state (S702). When the image data is transmitted from the image data transmission device 2 in the "standby" state (S702) and the handheld printer 1 starts receiving the image data, the state shifts to a "warm up" state (S703).

In the "warm up" state (S703), the heater control is performed so that the temperature of the IJ recording head 108 exceeds a threshold value of the temperature at which the liquid can be discharged. When the reception of the image data is completed and the temperature of the IJ recording head 108 exceeds the threshold value, the state shifts to a "printing" state (S704).

In the "printing" state (S704), an operation start trigger is input and the user 4 scans the recording medium 3 and a predetermined image forming operation is performed. When this image forming operation is completed (completion of printing), the operation of the handheld printer 1 ends.

In any of the states S701 to S704, when an abnormal state that can be cancelled by the user is detected, the state shifts to an "operator call" state (S705). When the operator call state is cancelled, the state returns to the previous state. Here, examples of the abnormal state that shifts to the operator call include a state in which a lid constituting part of the housing of the handheld printer 1 is open, a state in which the ink cartridge used by the IJ recording head 108 is out of ink. and defective contact of the ink cartridge.

In any of the states S701 to S704, if an abnormal state exceeding an extent that can be dealt with by the user is detected, the state shifts to an "abnormal" state (S706). When the state shifts to "abnormal" (S706), the handheld printer 1 is in a state in which the processing cannot be continued.

If a "maintenance request" is requested from the image data transmission device 2 during the "standby" state (S702), the process proceeds to printing (S704).

### Embodiment of Image Forming Output Operation

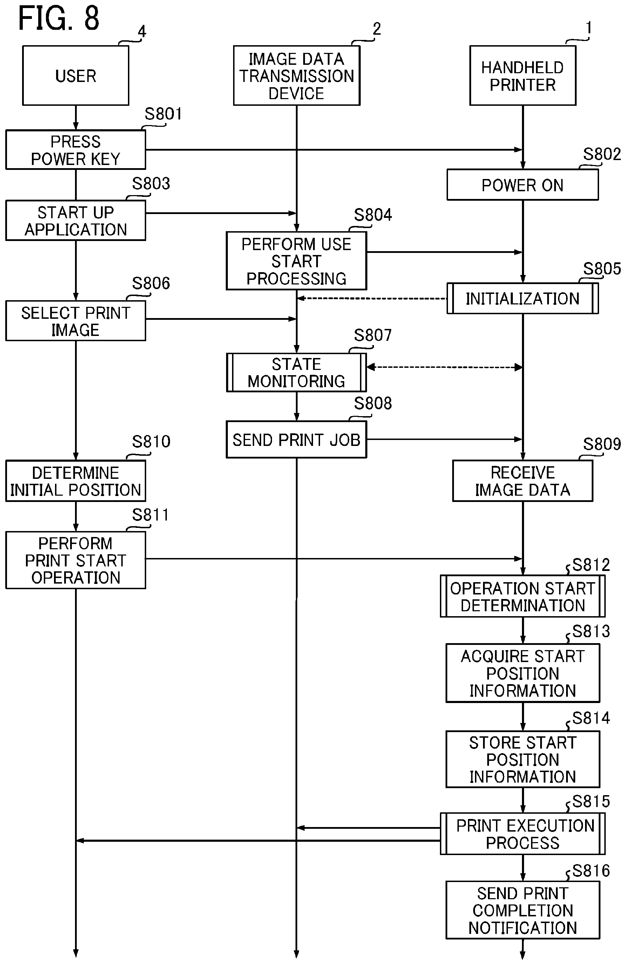

Next, a description is given of an example of a processing operation of a data processing program executed in a computer as a data processing apparatus that executes a specific processing operation according to data transmitted from an external device. In an embodiment, the flow of an image formation output operation using the handheld printer 1 is exemplified and the flow of a data processing method using the computer is described. FIG. 8 is a sequence diagram of an operation procedure from start-up to completion of image formation of the handheld printer 1 according to the present embodiment.

In the process of FIG. 8, the processing for which the CPU 111 is described as an execution subject is processing realized by functions that becomes available by the CPU 111 executing firmware or the like.

When the user 4 presses the power switch of the handheld printer 1 (S801), the handheld printer 1 starts power supply from the power supply 141 (S802). Thus, the initialization process (S805) is performed. In the initialization process (S805), the CPU 111 executes a process for initializing electronic devices constituting the handheld printer 1, for example, components such as the ASIC / FPGA 120.

The user 4 causes the image data transmission device 2 to execute an application for causing the handheld printer 1 to execute an image forming operation, which is a specific processing operation (S803). In FIG. 8, the application is started (S803) after the power button is pressed on the handheld printer 1 (S801). Note that the order of operation and processing is not limited to the above-described order and may be reversed.

The image data transmission device 2 starts a predetermined application in the step of starting up the application (S803), starts communication with the handheld printer 1, and executes use start processing (S804). The use start processing (S804) is processing of establishing a communication state between the image data transmission device 2 and the handheld printer 1 so that communication processing with the handheld printer 1 can be performed. The use start processing (S804) includes processing of receiving information indicating the state of the handheld printer 1. After starting the application in the image data transmission device 2, the user 4 uses the application to select an image (print image) for which print processing is requested on the application (S806). In the present embodiment, it is assumed that the use start processing (S804) is performed before the initialization process (S805) of the handheld printer 1 is completed, and a print image selection processing (S806) is performed after the initialization process (S805). The timing at which the initialization process (S805) is completed is not limited to the timing illustrated in FIG. 8. For example, the print image selection (S806) may be able to be executed in the image data transmission device 2 even while the initialization process (S805) is being performed.

Even if the user 4 can perform the print image selection processing (S805), the user 4 cannot execute print job transmission (S808) unless a permission state of the print processing (operation permission state) is created by the initialization process (S806) in the handheld printer 1 and the state monitoring process (S807) in the image data transmission device 2. The details are described below.

### Detailed Flow of Initialization Process (S806)

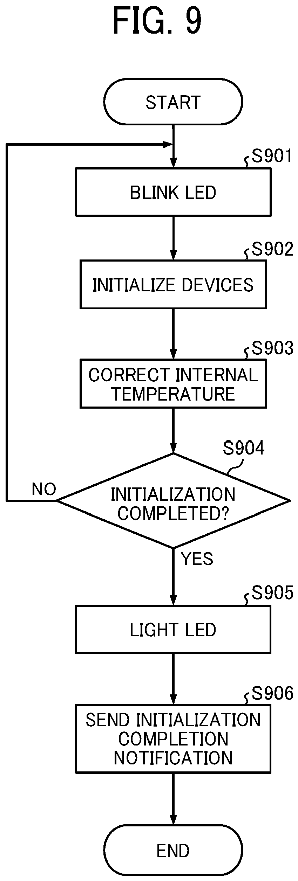

The detailed flow of the initialization process (S806) in the handheld printer 1 is described with reference to FIG. 9. First, an LED of the OPU 104 for notifying the user 4 that initialization is being performed is blinked (S901). Here, the blinking speed of the LED may be changed so as to be linked to the progress of each process described later.

Next, first, the SoC 110 and the ASIC / FPGA 120 are started to set an operation start initial state (S902). Next, the internal environmental temperature is measured with the temperature sensor 150, and the internal temperature is corrected based on the measurement result (S903). It is determined whether the initialization process has been completed by the above-described steps (S904). If the initialization process has not been completed (NO in S904), the process is looped until completion.

When the initialization process is completed (YES in S904), the LED of the OPU 104 is changed from blinking to lighting (S905). Thus, the user 4 is notified that the initialization has been completed. After the initialization is completed, an initialization completion notification is transmitted to the image data transmission device 2 (S906). In S905, a sound or voice notifying that the initialization has been completed may be output from the audio speaker 160.

### Detailed Flow of Status Monitoring Process (S807)

The state monitoring process (S807) is a process that is continuously executed in the image data transmission device 2 after the use start processing (S804) is executed. In FIG. 8, the state monitoring process (S807) is illustrated to be executed after the use start processing (S804) and before the print job transmission processing (S808). However, the execution timing of the state monitoring process (S807) is not limited to the timing of FIG. 8.

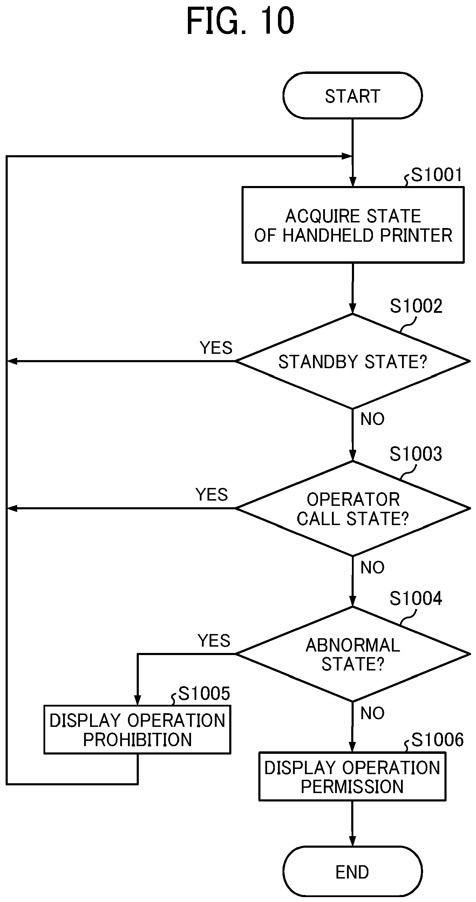

Details of the state monitoring process (S807) are described with reference to FIG. 10. First, the image data transmission device 2 requests the handheld printer 1 to notify the image data transmission device 2 of the state. In response to the request, the state of the handheld printer 1 is notified from the handheld printer 1 to the image data transmission device 2 (S1001).

Subsequently, if the notified state is "standby" (YES in S1002), an operation prohibition display is displayed on the display unit 261 of the image data transmission device 2 (S1005).

Even if the notified state is not "standby" (NO in S1002) but is "operator call" (YES in S1003) or "abnormal" (YES in S1004), similarly, an operation prohibition display is displayed on the display unit 261 of the image data transmission device 2 (S1005).

When the notified state is not any of "standby", "operator call", and "abnormal" (YES in S1004), an operation permission display is displayed on the display unit 261 of the image data transmission device 2 (S1006). As described above, in the state monitoring process (S807), when it is determined that the state of the handheld printer 1 is not suitable for performing the image forming operation, which is a specific processing operation, the CPU 111 controls the process not to proceed to the print job transmission (S808) for transmitting the image data from the image data transmission device 2 to the handheld printer 1.

### Embodiment of Operation Prohibition Display and Operation Permission Display

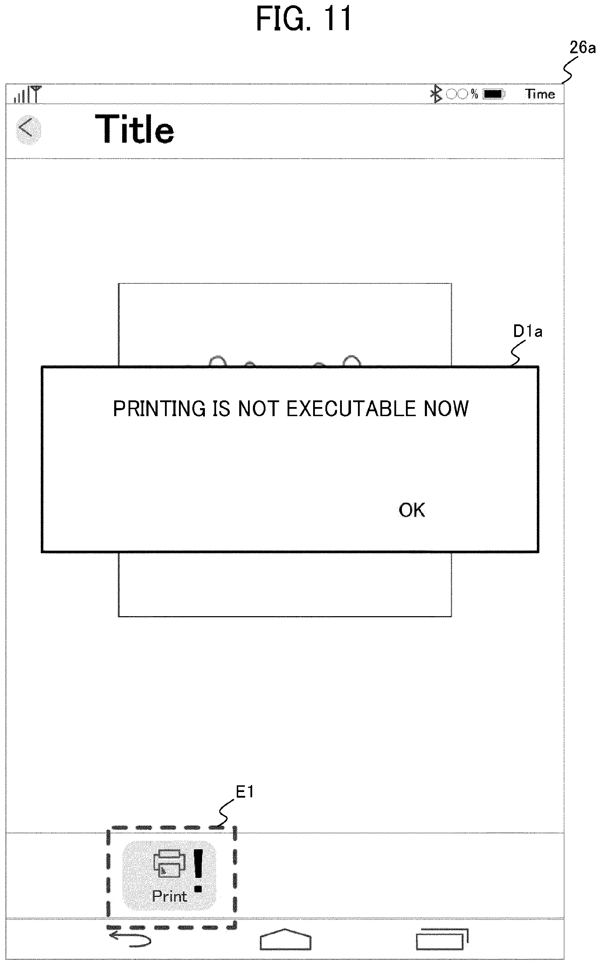

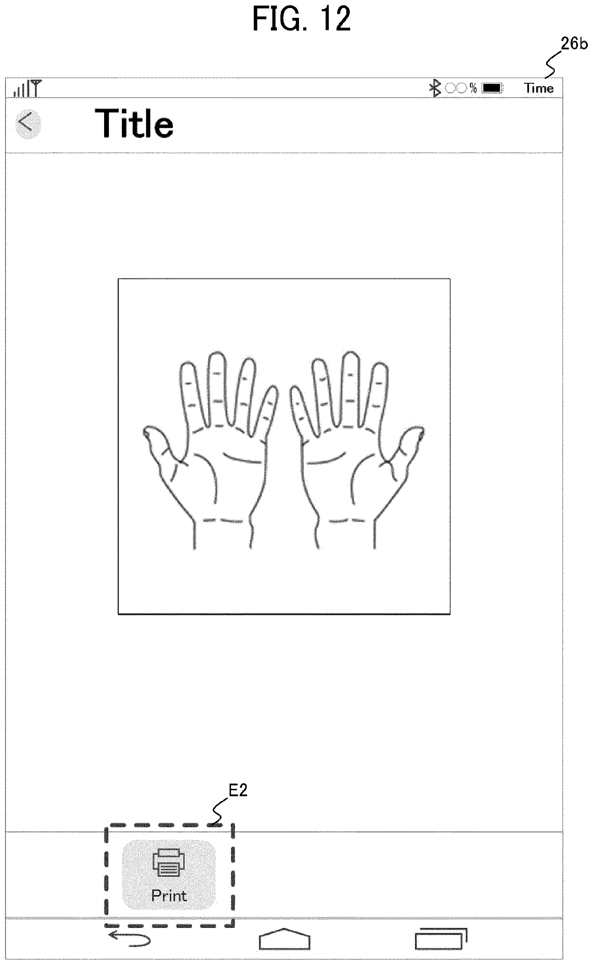

Here, examples of "operation prohibition display" and "operation permission display" displayed in the image data transmission device 2 are described with reference to FIGS. 11 and 12. A display 26a illustrated in FIG. 11 is an example of "operation prohibition display". The display 26a displays a prohibition dialog D1a indicating that the handheld printer 1 is in an unusable state on a screen for selecting image formation output target data of an application started by the image data transmission device 2. Further, the display of an icon E1 operated by the user 4 for executing printing is devised so that the user 4 can visually recognize "a state in which printing is not permitted".

A display 26b illustrated in FIG. 12 is an example of "operation permission display". The display 26b does not display the prohibition dialog D1a indicating that the handheld printer 1 is in the unusable state on the screen for selecting the image formation output target data of the application started by the image data transmission device 2. The display of an icon E2 operated by the user 4 for executing printing is devised so that the user 4 can visually recognize "a state in which printing is permitted".

The "operation prohibition display" and "operation permission display" described above are the results of controlling the display of the display unit 261 based on the determination result information transmitted from the handheld printer 1 to the image data transmission device 2. That is, the handheld printer 1 outputs information for restricting the transmission of image data to the image data transmission device 2, and the image data transmission device 2 is controlled to stop transmitting the image data based on the information.

Referring back to FIG. 8, a description is further given. When the user 4 performs an operation of printing the image selected in S806 while the operation permission display is displayed on the image data transmission device 2, the image data transmission device 2 generates and transmits the print job and the image area information to the handheld printer 1 (S808).

Note that, when the user 4 performs an operation to print the image selected in S806, the application installed in the image data transmission device 2 calls a printer driver, describes printing conditions and the image data in a predetermined format, and send the printing conditions and the image data to the handheld printer 1. Note that image data in a format of TIFF, JPEG, or the like may be transmitted to the handheld printer 1 without changing the format using a printer driver.

The image area calculation unit 202 generates image area information using the upper left end of the image data selected as an image to be formed by the user 4 as an origin. The image area calculation unit 202 may also generate the image area information with a margin around the area in which the image is actually formed, in consideration of the width of the body of the handheld printer 1 and the like.

When the transmission of the image data to the handheld printer 1 is started (S808), the CPU 111 notifies the user 4 that the image data is being received (reception of the image data is not completed), for example, by blinking the LED switch (S809).

When the reception of the image data is completed, the CPU 111 notifies the user 4 of the completion of the reception of the image data by, for example, changing the blinking of the LED switch to the lighting. The CPU 111 transfers the received image data to the DMAC 122.

When the OPU 104 has a sound generation mechanism, the image data reception notification and the image data reception completion notification may be performed by voice.

The user 4 determines the initial position of the handheld printer 1 on the recording medium 3, that is, the start position of image formation, while receiving image data in the handheld printer 1 (S810).

The user 4 determines the initial position by, for example, an operation of placing the handheld printer 1 at an arbitrary position on the recording medium 3. After determining the initial position, the user 4 places the handheld printer 1 at an arbitrary position on the recording medium 3 as an expected start position of image formation output, and performs a print start operation of pressing the LED switch (S811). The operation of S811 acts as a trigger for starting the printing operation for the handheld printer 1.

### Detailed Flow of Operation Start Determination Process (S812)

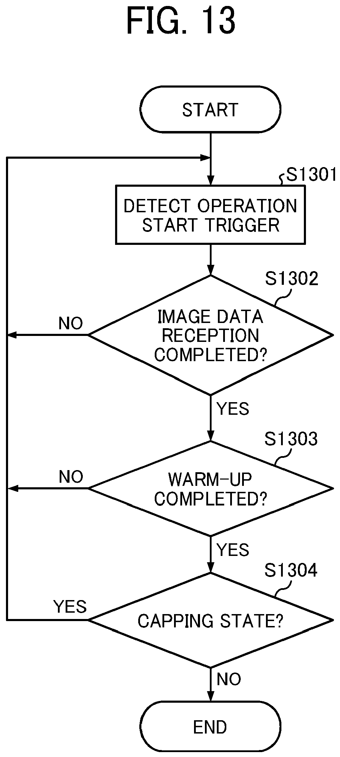

Subsequently, the handheld printer 1 executes an operation start determination process (S812). Step S812 is described in detail with reference to FIG. 13.

First, when an operation start trigger is detected (S1301), it is determined whether all print jobs (image data) transmitted from the image data transmission device 2 have been received (S1302). If the reception of the image data has not been completed (NO in S1302), the process returns to S1301.

If the reception of the image data has been completed (YES in S1302), subsequently, it is determined whether the warm-up of the IJ recording head 108 of the handheld printer 1 has been completed (S1303). If the warm-up has not been completed (NO in S1303), the process returns to S1301 because the operation preparation has not been completed.

If the warm-up has been completed (YES in S1303), subsequently, it is determined whether the IJ recording head 108 of the handheld printer 1 is capped with the cap (S1304). If the IJ recording head 108 is capped with the cap, that is, is in the capping state (YES in S1304), the process returns to S1301. If the IJ recording head 108 is not in the capping state (NO in S1304), the operation start determination ends.

Referring back to FIG. 8, a description is further given. After the print start operation is performed (S811) and the operation start determination process (S812) is completed, the CPU 111 accepts a key interrupt by the LED switch and causes the navigation sensor 105 to detect the position of the handheld printer 1 via the navigation sensor I / F 125 (S813). The initial position of the handheld printer 1 on the recording medium 3 detected by the navigation sensor 105 in the processing of S813 is the position of the handheld printer 1 at the start of image formation, that is, the start position of image formation by the handheld printer 1.

Information on the start position detected by the navigation sensor 105 is stored in a storage medium such as the DRAM 102 as start position information of the handheld printer 1 (S814).

As described above, the distance from the navigation sensor 105 to the end of the IJ recording head 108, the distance from a nozzle at the position closest to the end of the IJ recording head 108 and the end of the IJ recording head 108, and the distance between the nozzles arranged in the IJ recording head 108 are stored in advance in a storage medium such as the ROM 103.

Therefore, the position calculation unit 112 can calculate the positions of the IJ recording head 108 and the nozzles arranged in the IJ recording head 108 based on the position information of the handheld printer 1.

Based on the detection result of the navigation sensor 105 acquired in S813, the position calculation unit 112 may calculate the positions of the IJ recording head 108 and the nozzles arranged in the IJ recording head 108.

Further, the result calculated by the position calculation unit 112 may be stored in a storage medium such as the DRAM 102 as start position information on the positions of the IJ recording head 108 and the nozzles arranged in the IJ recording head 108 at the start of image formation output.

The start position of the handheld printer 1 detected by the navigation sensor 105 may be stored as, for example, the coordinates (0, 0) in the DRAM 102 or the like. After storing the start position, the CPU 111 starts a print execution process (S815). Details of the print execution process are described later.

When determining that the processing of S815 is completed, the CPU 111 transmits a print completion notification to the image data transmission device 2. The CPU 111 notifies the user 4 that the printing of the image data has been completed, for example, by turning off the LED switch (S816).

Note that, for the handheld printer 1 according to the present embodiment, the user 4 cannot recognize whether the handheld printer 1 is scanning an image area in which image data is formed on the recording medium 3 during execution of image formation output on the recording medium 3. Here, the handheld printer 1 also has a function of notifying the user 4 of the state of the positional relationship between the current position and the image area.

### Detailed Flow of Print Execution Process (S815)

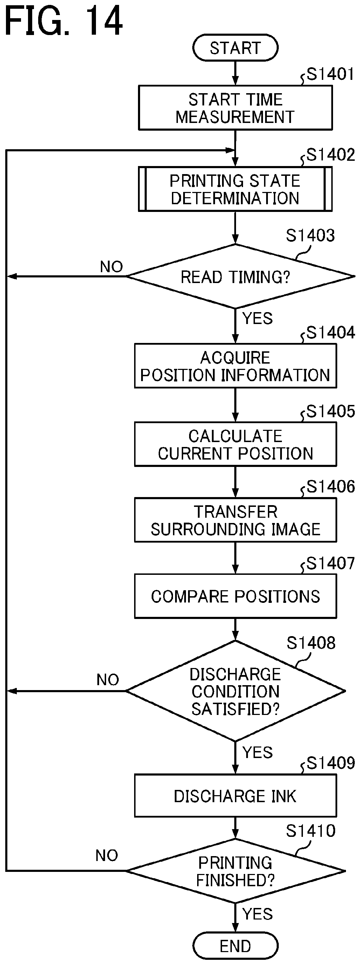

Details of the print execution process of S815 are described with reference to the flowchart of FIG. 14. When the start position information of the handheld printer 1 is stored in the storage medium by the processing of S814, the CPU 111 causes the printing-and-sensor timing generation unit 126 to start time measurement (S1401). In S1401, the position of the IJ recording head 108 and the positions of the nozzles arranged in the IJ recording head 108 may be stored as the start position information of the handheld printer 1.

Subsequently, a printing state determination process (S1402) is executed. In S1402, when a printing operation, which is a specific processing operation, is performed using the handheld printer 1, it is determined whether the handheld printer 1 is in a state suitable for continuing the processing operation.

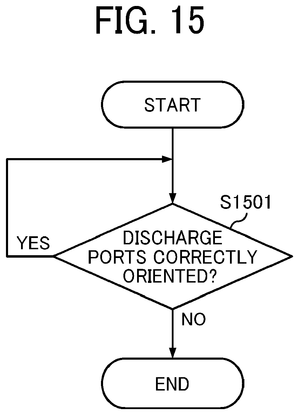

Details of S1402] Here, details of the printing state determination process (S1402) are described with reference to the flowchart of FIG. 15. As illustrated in FIG. 15, the CPU 111 determines "floating" of the handheld printer 1 based on the detection results of the navigation sensor 105 and the gyro sensor 106 of the handheld printer 1. The term "floating" means that the orientation of the ink discharge ports (nozzle orifices) of the IJ recording head 108 is not in the correct state so that a normal liquid discharge operation can be performed on the recording medium 3. If the handheld printer 1 is "floating" (YES in S1501), the process loops until the "floating" state is released.

If the handheld printer 1 is not "floating" (NO in S1501), the process ends.

Referring back to FIG. 14, a description is further given. When a preset read timing of the navigation sensor 105 comes (YES in S1403) after the end of the printing state determination (S1402), the navigation sensor I / F 125 causes the navigation sensor 105 to detect the moving amount of the handheld printer 1 and the like (S1404).

The CPU 111 acquires the detection result of the navigation sensor 105 from the ASIC / FPGA 120 and causes the position calculation unit 112 to calculate the current position P1 of the handheld printer 1 (S1405). In the processing of S1405, the position calculation unit 112 calculates the current position PI (X1, Y1) of the handheld printer 1 based on the position P (X, Y) of the handheld printer 1 calculated last time and the moving amount ΔP (ΔX, ΔY) of the handheld printer 1 acquired this time and stores the current position P1 in the DRAM 102.

Subsequently, the CPU 111 transfers the information on the calculated current position PI (X1, Y1) of the handheld printer 1 to the ASIC / FPGA 120. Note that, based on the position information of the handheld printer 1, the position calculation unit 112 calculates the positions of the IJ recording head 108 and the nozzles arranged in the IJ recording head 108, and the CPU 111 may transfer the calculation result to the ASIC / FPGA 120 as the current position P1 of the IJ recording head 108 and each of the nozzles arranged in the IJ recording head 108.

The DMAC 122 acquires image data around the nozzles arranged in the IJ recording head 108 from the DRAM 102 based on the position information of the current position P1 (X1, Y1) of the handheld printer 1 and temporarily stores the image data in the image RAM 121.

The rotation processing unit 123 acquires image data around the nozzles from the image RAM 121 based on the current position P1 (X1, Y1) of the handheld printer 1 and performs rotation processing on the acquired image data around the nozzles. (S1406).

The DMAC 122 deletes, from the DRAM 102, the image data around the nozzles acquired from the DRAM 102. The IJ-recording-head control unit 127 compares the coordinates of the rotated image data with the coordinates of the nozzle position determined based on the current position P1 (X1, Y1) of the handheld printer 1 (S1407).

When it is determined that the preset ink discharge condition is satisfied, that is, the nozzle position has reached the target discharge position that is determined as a position on which ink is to be discharged based on the image data, or the deviation between the nozzle position and the target discharge position is within an allowable error (S1408 / YES), the IJ-recording-head control unit 127 inputs the rotated image data around the nozzles of the IJ recording head 108 to the IJ-recording-head drive circuit 107 in the processing of S905.

The IJ-recording-head drive circuit 107 causes the IJ recording head 108 to discharge ink to the recording medium 3 based on the input image data (S1409). Until all image data as the object of image formation output stored in the DRAM 102 is transferred to the DMAC 122 or until a signal for ending the image formation output is received by, e.g., operation of the user 4 on the LED switch (NO in S1410), the processing steps from S1402 to S1410 are repeatedly executed to form an image on the recording medium 3.

In S1409, ink is discharged, and all the image data as the object of image formation output stored in the DRAM 102 has been transferred to the DMAC 122 or the signal (printing operation end trigger) for ending the image formation output has been received by, e.g., the operation of the user 4 on the LED, the CPU 111 determines that the image formation output has ended (YES in S1410).

As described above, the handheld printer 1 according to the present embodiment determines whether the handheld printer 1 is in a state suitable for performing an image forming operation. When the handheld printer 1 is not in the state suitable for performing the image forming operation, the handheld printer 1 causes the image data transmission device 2 to restrict the transmission of image data. More specifically, a user I / F for the user 4 is controlled so that image data cannot be transmitted.

Even if the image data is received and an operation start trigger for instructing the start of the image forming operation is received, control is performed so that the operation is not executed until the handheld printer 1 is in the state suitable for the image forming operation. Such a configuration can prevent the occurrence of a behavior unintended by the user 4.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A data processing apparatus (1) configured to perform a specific processing operation in accordance with data transmitted from an external device (2), the data processing apparatus comprising:
a data receiving unit (109) configured to receive the data from the external device via a communication line;
an operation receiving unit (104) configured to receive an operation for instructing execution of the processing operation from the external device;
a data processing unit (111, 107) configured to execute data processing for executing the processing operation in accordance with the operation;
a state determination unit (111, 1135) configured to perform determination on whether a state of the data processing apparatus (1) is suitable for continuing the data processing; and
a result output unit (109, 129, 1134, 111, 104) configured to output determination result information to the external device in accordance with the determination and the operation, the determination result information including information on content of the determination.

2. The data processing apparatus according to claim 1, further comprising an operation restriction unit (111, 107) configured to restrict the data processing in the data processing unit (111, 107) in accordance with the content of the determination.

3. The data processing apparatus according to claim 2,
wherein, when the operation received by the operation receiving unit (104) instructs a start of the data processing and the content of the determination performed by the state determination unit (111, 1135) indicates that the data for the data processing has not been received, the operation restriction unit (111, 107) disables the operation for instructing the start received by the operation receiving unit (104) and stops the data processing.

4. The data processing apparatus according to claim 2 or 3,
wherein, when the content of the determination indicates that an initialization process is being performed, the result output unit (109, 129, 1134, 111, 104) outputs, to the external device, information for causing the external device to restrict transmission of the data.

5. The data processing apparatus according to any one of claims 2 to 4, further comprising an external output unit (108) configured to execute an external output based on a result of the data processing,
wherein, when the operation received by the operation receiving unit (104) instructs a start of the data processing and the content of the determination performed by the state determination unit (111, 1135) indicates that an operation preparation of the external output unit (108) is not completed, the operation restriction unit (111, 107) disables the operation for instructing the start received by the operation receiving unit (104).

6. The data processing apparatus according to claim 5,
wherein, when the content of the determination performed by the state determination unit (111, 1135) indicates that the external output from the external output unit (108) cannot be normally continued, the operation restriction unit (111, 107) stops operation of the external output unit (108).

7. The data processing apparatus according to claim 5,
wherein, when the content of the determination performed by the state determination unit (111, 1135) indicates that the external output from the external output unit (108) cannot be performed, the operation restriction unit (111, 107) stops operation of the external output unit (108) and disables the operation received by the operation receiving unit (104).

8. The data processing apparatus according to any one of claims 1 to 7,
wherein, when the content of the determination performed by the state determination unit (111, 1135) indicates that the data processing cannot be continued, the result output unit (109, 129, 1134, 111, 104) outputs, to the external device, information for causing the external device to restrict transmission of the data.

9. A data processing method for executing a specific processing operation in accordance with data transmitted from an external device, the method comprising:
receiving the data from the external device via a communication line;
receiving an operation for instructing execution of the processing operation from outside;
executing data processing for executing the processing operation in accordance with the operation;
performing determination on whether a state of an apparatus to execute the processing operation is suitable for continuing the data processing; and
outputting determination result information to the external device in accordance with the determination and the operation, the determination result information including information on content of the determination.

10. The data processing method according to claim 9, further comprising restricting the data processing in accordance with the content of the determination.

11. The data processing method according to claim 10,
wherein, when the operation received instructs a start of the data processing and the content of the determination indicates that the data for the data processing has not been received, the restricting disables the operation for instructing the start received and stops the data processing.

12. The data processing method according to claim 10 or 11,
wherein, when the content of the determination indicates that an initialization process is being performed, the outputting outputs, to the external device, information for causing the external device to restrict transmission of the data.

13. The data processing method according to any one of claims 10 to 12, further comprising executing an external output based on a result of the data processing,
wherein, when the operation received instructs a start of the data processing and the content of the determination indicates that an operation preparation of the external output is not completed, the restricting disables the operation for instructing the start received.

14. The data processing method according to claim 13,
wherein, when the content of the determination indicates that the external output cannot be normally continued, the restricting stops operation of the external output.

15. A carrier medium carrying computer readable code for controlling a computer to carry out the data processing method according to any one of claims 9 to 14.
